# EUROPÄISCHE PATENTSCHRIFT

(11) **EP 1 561 066 B1**
(45) Veröffentlichungstag und Bekanntmachung des Hinweises auf die Patenterteilung: **18.07.2007**
(21) Anmeldenummer: 03750701.9
(22) Anmeldetag: 09.10.2003
(51) Int. Cl.: F16P 3/14, B21D 55/00

(54) **SICHERHEITSEINRICHTUNG FÜR EINE MASCHINE, INSBESONDERE FÜR EINE BIEGEPRESSE**
SAFETY DEVICE FOR A MACHINE, IN PARTICULAR FOR A BENDING PRESS
DISPOSITIF DE SECURITE POUR MACHINE, EN PARTICULIER POUR UNE PRESSE A PLIER

(30) Priorität: 05.11.2002 DE 20217426 U
(43) Veröffentlichungstag der Anmeldung: 10.08.2005
(73) Patentinhaber: Pilz GmbH & Co. KG, 73760 Ostfildern (DE)
(72) Erfinder: SCHNEIDERHEINZE, Dirk, Swan View, W.A. 6056 (AU)
(74) Vertreter: Duhme, Torsten
(86) Internationale Anmeldenummer: PCT/EP2003/011170
(87) Internationale Veröffentlichungsnummer: WO 2004/042269

(56) Entgegenhaltungen:
- DE-A- 10 027 156
- DE-A- 19 604 900
- DE-A- 19 717 299

## Beschreibung

Die vorliegende Erfindung betrifft eine Sicherheitseinrichtung für eine Maschine, bei der ein erstes Maschinenteil eine Arbeitsbewegung gegen ein zweites Maschinenteil ausführt, insbesondere für eine Biegepresse, wobei das erste Maschinenteil eine in Bewegungsrichtung vorlaufende Kontur besitzt, die eine Bewegungsebene definiert.

Ein bekanntes Verfahren zur spanlosen Bearbeitung von Werkstücken ist das Biegen oder Abkanten. Dabei wird ein im Bereich der Bearbeitungsstelle zunächst noch flaches Werkstück unter Druck umgeformt. Bei der maschinellen Bearbeitung werden hierzu Maschinen verwendet, die nachfolgend allgemein als Biegepressen bezeichnet sind. Die Erfindung ist jedoch nicht auf Biegepressen im engeren Sinne begrenzt und kann ebenso bei Abkantpressen, Stanzmaschinen, Schneidemaschinen und anderen Maschinen verwendet werden, bei denen zwei Maschinenteile eine gefahrbringende Arbeitsbewegung gegeneinander ausführen.

Bei einer Biegepresse erfolgt die Umformung des Werkstücks im wesentlichen dadurch, dass das Werkstück mit einem Biegestempel gegen eine Matrize gepresst wird. Die gewünschte Formgebung lässt sich durch entsprechende Ausbildung des Biegestempels und der Matrize erreichen. Häufig ist der Biegestempel ein Werkzeug, das an einem ersten, beweglichen Maschinenteil angeordnet ist, während die Matrize an einem zweiten, feststehenden Maschinenteil sitzt. Da es jedoch nur auf die Relativbewegung der beiden Maschinenteile zueinander ankommt, kann alternativ auch die Matrize bewegt sein oder es können beide Maschinenteile gegeneinander bewegt werden. Die erfindungsgemäße Sicherheitsvorrichtung kann in allen genannten Fällen zur Anwendung kommen.

Es ist leicht nachvollziehbar, dass von einer Biegepresse eine erhebliche Gefahr für das Bedienpersonal ausgeht, insbesondere die Gefahr von Quetschungen oder sogar die Abtrennung von Körperteilen. Dementsprechend ist es bereits seit langem bekannt, Biegepressen und dergleichen mit einer Sicherheitseinrichtung zu versehen, um Unfälle so weit wie möglich zu vermeiden. In der DE-Patentschrift 852 027 ist beispielsweise eine Lichtgitterschutzvorrichtung für eine Presse beschrieben, bei der ein Lichtgitter mit mehreren einzelnen Lichtstrahlen derart angeordnet ist, dass es sich bei der Gefahr bringenden Bewegung des ersten Maschinenteils mit abwärts bewegt. Wird einer der Lichtstrahlen unterbrochen, wird die Bewegung des ersten Maschinenteils gestoppt. Die Lichtstrahlen des Lichtgitters verlaufen vor und hinter dem eigentlichen Arbeitsbereich, d.h. das Lichtgitter senkt sich parallel zur Arbeitsbewegung des ersten Maschinenteils wie eine Art Schutzvorhang vor dem Bediener der Maschine ab.

Aus der US 5,579,884 ist eine Lichtschrankenanordnung bekannt, bei der zwei oder drei Lichtstrahlen parallel zur vorderen Kante des Biegestempels diesem vorauslaufen. Wird einer der Lichtstrahlen unterbrochen, stoppt die Bewegung des Biegestempels. Im Falle von nur zwei Lichtstrahlen verlaufen diese symmetrisch nach vorne (zur Bedienerseite hin) und nach hinten (zu der vom Bediener abgewandten Seite hin) versetzt. Gleiches gilt im Fall von drei verwendeten Lichtstrahlen, wobei der dritte Lichtstrahl dann genau unterhalb der vorderen Kante des Biegestempels und mit einem größeren Vorlauf als die beiden anderen Lichtstrahlen angeordnet ist. Der dritte Lichtstrahl dient bei der Anordnung gemäß der US 5,579,884 vorrangig als Kontrollstrahl, der verhindert, dass ein sogenannter Muting Point zu tief eingestellt werden kann. Der Muting Point (muting = stillsetzen) bestimmt eine Stelle im Bewegungsablauf des Biegestempels, ab dem die Lichtstrahlen der Sicherheitseinrichtung kurzzeitig deaktiviert sind. Ohne eine solche kurzzeitige Deaktivierung könnte der eigentliche Bearbeitungsvorgang nämlich nicht vollendet werden, da der Biegestempel ansonsten stets stillgesetzt wird, wenn das zu bearbeitende Werkstück die Lichtstrahlen unterbricht.

In einem weiteren Ausführungsbeispiel der US 5,579,884 ist zusätzlich zu den drei genannten Lichtstrahlen ein Lichtgitter zwischen dem Bediener und dem bewegten Biegestempel vorgesehen.

Diese Anordnung ist speziell für den Fall vorgesehen, dass der Biegestempel verschiedene Bereiche aufweist, die unterschiedlich weit in Bewegungsrichtung gesehen vorstehen. Durch das Lichtgitter soll verhindert werden, dass ein Bediener in einen "kürzeren" Abschnitt des Biegestempels eingreifen kann, nachdem die drei vorhergenannten Lichtschranken deaktiviert sind, weil ein "längerer" Bereich des Biegestempels den Muting Point überschritten hat.

Aus der DE 100 27 156 A1 ist eine Sicherheitseinrichtung für Abkantpressen und dergleichen bekannt, bei der die Deaktivierung der Lichtstrahlen abhängig von der Geschwindigkeit der Arbeitsbewegung erfolgt. Die beschriebene Lichtschrankenanordnung beinhaltet zwei oder drei Lichtstrahlen, die im wesentlichen unterhalb der vorderen Kante des Biegestempels verlaufen. Ein erster Lichtstrahl verläuft dabei praktisch auf Höhe und in unmittelbarer Nähe zu der vorderen Kante, während zwei weitere Lichtstrahlen einen zunehmenden Abstand von der vorlaufenden Kante besitzen. In einem Ausführungsbeispiel werden die weiter vorlaufenden Lichtstrahlen nacheinander, d.h. bei unterschiedlichen Arbeitspositionen des Biegestempels, deaktiviert.

Aus der DE 197 17 299 A1 ist eine Sicherheitseinrichtung mit bis zu vier Lichtschranken bekannt, wobei der Lichtstrahl einer ersten Lichtschranke auf Höhe der vorderen Kante des Biegestempels und in unmittelbarer Nähe davon verläuft. Die anderen drei Lichtstrahlen bilden ein Lichtgitter, das mit einem gewissen Vorlauf zu dem Biegestempel und senkrecht zur Bewegungsrichtung, also "liegend" angeordnet ist. Der oberste einzelne Lichtstrahl dient zur Justierung des Vorlaufs der anderen Lichtstrahlen in Bezug auf die Vorderkante des Biegestempels.

Aus WO 97/25568 und WO 00/67932 sind vergleichbare Anordnungen bekannt, bei denen jeweils ein Lichtgitter oder Lichtfächer quer zur Bewegungsrichtung des Biegestempels diesem vorausläuft.

Aus der DE 27 50 234 ist eine Sicherheitseinrichtung mit zwei Lichtstrahlen bekannt, bei der ein erster Lichtstrahl parallel zur vorderen Kante des Biegestempels diesem vorausläuft, während ein zweiter Lichtstrahl parallel im Bereich der feststehenden Matrize angeordnet ist.

Bei einer Sicherheitseinrichtung gemäß US 4,166,369 laufen drei Lichtstrahlen mit zunehmendem Abstand der vorderen Kante des Biegestempels voraus, wobei diese jeweils abhängig von der erreichten Position des Biegestempels nacheinander kurzzeitig deaktiviert werden (Muting).

Schließlich ist aus der DE 196 04 900 A1 eine Sicherheitseinrichtung bekannt, bei der eine Vielzahl von Lichtstrahlen parallel zur Bewegungsrichtung des Biegestempels angeordnet sind. Abweichend von den zahlreichen anderen Beispielen laufen diese Lichtstrahlen jedoch nicht mit der Bewegung des Biegestempels mit. Statt dessen durchläuft der Biegestempel das Lichtgitter der Lichtstrahlen und eine Steuereinrichtung deaktiviert die einzelnen Lichtstrahlen in Abhängigkeit von voreingestellten Steuerdatensätzen (Muting).

Insgesamt sind damit bereits eine Vielzahl verschiedenster Sicherheitseinrichtungen für Biegepressen und ähnliches bekannt, bei denen jeweils Lichtschranken dazu verwendet werden, um ein Eingreifen eines Bedieners in den gefährlichen Arbeitsbereich zu detektieren und die Arbeitsbewegung gegebenenfalls zu stoppen. Allen zahlreichen bekannten Anordnungen ist gemeinsam, dass die jeweiligen Lichtschrankenanordnungen sehr exakt an die individuelle Maschine angepasst sein müssen, was ggf. recht aufwendig ist. Insbesondere der Vorlauf der einzelnen Lichtstrahlen zu der Vorderkante des Biegestempels ist eine kritische Größe, die auf die jeweils abzusichernde Maschine sehr genau abgestimmt sein muss. Infolgedessen muss der Hersteller und Vertreiber von gattungsgemäßen Sicherheitseinrichtungen einen nicht unbeträchtlichen Aufwand betreiben, um für verschiedene Arten von Biegepressen und dergleichen geeignete Sicherheitseinrichtungen bereitzustellen. Allein die aus der DE 196 04 900 C2 bekannte Anordnung besitzt eine gewisse Flexibilität, da eine Anpassung an verschiedene Maschinen durch entsprechende Programmierung der Steuereinrichtung möglich ist. Diese Programmierung kann dort jedoch im Einzelfall sehr aufwendig sein. Zudem beruht diese bekannte Sicherheitseinrichtung auf einem grundsätzlich anderen Konzept als die anderen beschriebenen Sicherheitseinrichtungen, da die Lichtschranken hier im Gegensatz zu den anderen Fällen feststehend angeordnet sind.

Vor diesem Hintergrund ist es eine Aufgabe der vorliegenden Erfindung, eine Sicherheitseinrichtung der vorstehend beschriebenen Art anzugeben, die für eine Vielzahl von verschiedenen Biegepressen gleichermaßen geeignet ist und die dabei einen verringerten Aufwand auf Herstellerseite erfordert.

Diese Aufgabe wird durch eine Sicherheitseinrichtung der eingangs genannten Art gelöst, mit
- einer Vielzahl von ersten Lichtschranken, die während der Arbeitsbewegung mit dem ersten Maschinenteil mitlaufen, wobei sich die Lichtstrahlen der ersten Lichtschranken parallel zu der Bewegungsebene erstrecken und im Bereich der Bewegungsebene derartig verteilt sind, dass sie der vorlaufenden Kontur in Richtung der Arbeitsbewegung geseehen mit zunehmendem Abstand vorauslaufen,
- mit einer Steuereinheit, die die Arbeitsbewegung des ersten Maschinenteils in Abhängigkeit von den ersten Lichtschranken stoppt, und
- mit einem Konfigurationsmittel, mit dessen Hilfe ausgewählte erste Lichtschranken zumindest für die Dauer der Arbeitsbewegung deaktivierbar sind.

Die erfindungsgemäße Sicherheitseinrichtung folgt daher dem auch im Stand der Technik überwiegend bevorzugten Konzept von Lichtschranken, die mit dem bewegten ersten Maschinenteil (bei Biegepressen also dem Biegestempel) mitlaufen. Dies ermöglicht es, im Gegensatz zu der DE 196 04 900 C2 eine vergleichsweise geringe Anzahl von Lichtschranken einzusetzen, wodurch die Materialkosten reduziert sind. Im Gegensatz zu allen anderen bekannten Sicherheitseinrichtungen besitzt die erfindungsgemäße Sicherheitseinrichtung jedoch abhängig von der vorgesehenen Maschine "zu viele" Lichtschranken, die dementsprechend zumindest für die Dauer der Arbeitsbewegung deaktivierbar sind. Mit Hilfe des Konfigurationsmittels, das in einem bevorzugten Ausführungsbeispiel der Erfindung eine computerbasierte Parametrierung ermöglicht, können die für eine bestimmte Maschine nicht benötigten Lichtschranken deaktiviert werden. Es sei darauf hingewiesen, dass es sich bei dieser Art der Deaktivierung nicht um das weiter oben beschriebene Muting handelt, welches die Lichtschranken jeweils nur für einen geringen Anteil der geamten Arbeitsbewegung deaktiviert. Erfindungsgemäß werden die nicht benötigten Lichtschranken hier über die gesamte Dauer der Arbeitsbewegung, bevorzugt sogar dauerhaft, deaktiviert.

Da eine Vielzahl von ersten Lichtschranken mit zunehmendem Abstand zu der vorlaufenden Kontur des ersten Maschinenteils vorhanden ist, kann die erfindungsgemäße Sicherheitseinrichtung besonders einfach an unterschiedliche Nachlaufwege des ersten Maschinenteils angepasst werden. Der Nachlaufweg gibt dabei diejenige Strecke an, die das erste Maschinenteil nach Auslösen eines Stoppbefehls bis zum endgültigen Stillstand noch zurücklegt, gleichsam also der Bremsweg inklusive Reaktionszeit. Sehr schnell arbeitende Maschinen besitzen einen größeren Nachlaufweg und benötigen daher Lichtschranken mit einem vergleichsweise großen Abstand zur vorlaufenden Kontur. Bei langsam arbeitenden Maschinen wäre ein zu großer Abstand der Lichtschranken von der vorlaufenden Kontur jedoch nachteilig, da in diesem Fall das nach wie vor benötigte Muting früher erfolgen würde als gewünscht. Bei bisherigen Sicherheitseinrichtungen war somit eine auf die individuelle Maschinengeschwindigkeit abgestimmte Justierung des Vorlaufs der Lichtschranken erforderlich. Bei Sicherheitseinrichtungen mit mehreren Lichtschranken erhöhte sich dementsprechend der Aufwand. Für manche Maschinentypen musste der Hersteller einer Sicherheitseinrichtung gar Individuallösungen vorsehen, um die geeignete Montage an der Maschine zu ermöglichen. Dieser Aufwand wird durch die erfindungsgemäß vorgesehene Bereitstellung gezielt auswählbarer Lichtschranken nun erheblich reduziert.

Die genannte Aufgabe ist daher vollständig gelöst.

In einer bevorzugten Ausgestaltung ist das Konfigurationsmittel so ausgebildet, dass die ersten Lichtschranken nur in umgekehrter Reihenfolge ihrer Abstände von der vorlaufenden Kontur deaktivierbar sind.

Diese Maßnahme führt zwangsläufig dazu, dass jeweils alle ersten Lichtschranken aktiviert sind, deren Abstand zur vorlaufenden Kontur gleich oder kleiner ist als aufgrund des Nachlaufweges erforderlich. Hierdurch wird auf kostengünstige und sichere Art und Weise ein zusätzlicher Schutz gegen ein Nachgreifen erreicht. Aufgrund der bereits erfindungsgemäß vorhandenen Vielzahl von ersten Lichtschranken, die gezielt auswählbar sind, ist dieser zusätzliche Schutz jedoch nicht mit einem zusätzlichen Herstellungs- und/oder Anpassungsaufwand verbunden.

In einer weiteren Ausgestaltung ist eine Vielzahl von zweiten Lichtschranken vorgesehen, deren Lichtstrahlen ein Lichtgitter aufspannen, das abseits der Bewegungsebene, jedoch im wesentlichen parallel dazu liegt.

Die zweiten Lichtschranken befinden sich damit nicht unmittelbar im Bewegungspfad des ersten Maschinenteils, sondern mit einem seitlichen Versatz hierzu, bevorzugt zur Bedienerseite hin. Diese Maßnahme ermöglicht alternativ und/oder ergänzend zu der vorhergehenden Ausgestaltung einen einfachen und wirksamen Schutz gegenüber einem Nachgreifen in Richtung der Arbeitsbewegung des ersten Maschinenteils.

In einer weiteren Ausgestaltung laufen die zweiten Lichtschranken bei der Arbeitsbewegung mit dem ersten Maschinenteil mit.

In dieser Ausgestaltung wird das gewählte Grundkonzept der mitlaufenden Lichtschranken konsequent fortgesetzt. Dadurch ist mit einer verhältnismäßig geringen Anzahl von zweiten Lichtschranken ein effektiver Schutz gegenüber bewusstem und/oder unbewusstem Nachgreifen möglich. Des weiteren vereinfacht sich die optimale Integration der zweiten Lichtschranken in das Sicherheitssystem, da die Montage vom Hersteller aus starr mit den ersten Lichtschranken gekoppelt werden kann.

In einer weiteren Ausgestaltung sind mit Hilfe des Konfigurationsmittels auch ausgewählte zweite Lichtschranken zumindest für die Dauer der Arbeitsbewegung deaktivierbar.

Diese Maßnahme ermöglicht eine noch bessere Anpassung einer im Grundtyp vorhandenen Sicherheitseinrichtung an die besonderen Gegebenheiten einer bestimmten Maschine. Insbesondere können unerwünschte "Fehlalarme" auf diese Weise wirkungsvoll reduziert werden.

In einer weiteren Ausgestaltung sind jeweils nur solche zweiten Lichtschranken deaktivierbar, die einer nicht-deaktivierten ersten Lichtschranke in Richtung der Arbeitsbewegung gesehen vorlaufen.

Mit anderen Worten wird durch diese Maßnahme erreicht, dass alle zweiten Lichtschranken, die in Bewegungsrichtung gesehen hinter der am weitesten vorlaufenden ersten Lichtschranke liegen, im Arbeitsbetrieb der Maschine aktiviert sind. Der Schutz gegenüber Nachgreifen wird hierdurch besonders zuverlässig sichergestellt, da eine gegebenenfalls unerwünschte Fehl-Abwahl von zweiten Lichtschranken verhindert ist.

In einer weiteren Ausgestaltung beinhaltet die Vielzahl von zweiten Lichtschranken zumindest eine zweite Lichtschranke, die der vorlaufenden Kontur in Richtung der Arbeitsbewegung gesehen nachläuft.

Auch durch diese Maßnahme wird der Schutz gegenüber absichtlichem oder unbeabsichtigtem Nachgreifen verbessert, da das Lichtgitter der zweiten Lichtschranken somit den gesamten Bereich angefangen von der vorlaufenden Kontur bis zur vorderen ersten Lichtschranke abdeckt.

In einer weiteren Ausgestaltung sind zumindest vier erste Lichtschranken vorhanden, deren Lichtstrahlen im Abstand von etwa 5 mm, etwa 9 mm, etwa 15 mm und etwa 21 mm zu der vorlaufenden Kontur verlaufen.

Die Anzahl von vier Lichtschranken und die angegebenen Abstände zu der vorlaufenden Kontur haben sich als besonders vorteilhaft erwiesen, um mit einem möglichst geringen (Kosten-)Aufwand eine hinreichende Flexibilität zu erreichen, die eine Absicherung bei einer Vielzahl von Biegepressen ermöglicht. Die angegebenen Abstände sind insbesondere sehr gut geeignet, um einen hinreichenden Schutz bei vorhandenen und zukünftigen Biegepressen zu gewährleisten.

In einer weiteren bevorzugten Ausgestaltung besitzt das Konfigurationsmittel einen Teil zum Bestimmen eines Nachlaufweges des ersten Maschinenteils und die ersten Lichtschranken sind nur in Abhängigkeit von dem Nachlaufweg deaktivierbar.

Durch diese Maßnahme wird die freie Konfigurierbarkeit der Lichtschrankenanordnung zu Gunsten einer erhöhten Sicherheit gegenüber Fehleinstellungen eingeschränkt. Es hat sich gezeigt, dass insbesondere der Nachlaufweg der abzusichernden Maschine eine kritische Größe darstellt, und die ersten Lichtschranken sollen im Optimalfall so ausgewählt und (de-)aktiviert werden, dass genau eine Lichtschranke von der vorlaufenden Kontur weiter entfernt ist als der vorhandene Nachlaufweg. Diese Ausgestaltung trägt dem Rechnung, indem die ersten und gegebenenfalls auch die zweiten Lichtschranken nur in Abhängigkeit des tatsächlichen Nachlaufweges auswählbar sind. Dabei wird sowohl die unabsichtliche Deaktivierung einer vorteilhafterweise benötigten Lichtschranke als auch die unbeabsichtigte Aktivierung einer tatsächlich nicht benötigten Lichtschranke vermieden.

In einem besonders bevorzugten Ausführungsbeispiel beinhaltet der Teil zum Bestimmen des Nachlaufweges eine vorzugsweise von der Steuereinheit gesteuerte Automatik, mit der der tatsächliche Nachlaufweg der abzusichernden Maschine bei der Konfiguration der Sicherheitseinrichtung zumindest einmalig bestimmt wird. Dies kann in einfacher Weise dadurch geschehen, dass die Steuereinrichtung im Rahmen der Konfiguration der Sicherheitseinrichtung einen oder mehrere Testläufe initiiert, bei denen der Nachlaufweg aktuell bestimmt wird. Hierdurch ist eine besonders zuverlässige und bedienungssichere Konfiguration möglich.

Alternativ kann der Teil zum Bestimmen des Nachlaufweges jedoch auch im wesentlichen aus einer Parametereingabe bestehen, bei der der Nachlaufweg der abzusichernden Maschine als Parameter eingelesen wird. Diese Alternative erfordert einen geringeren Aufwand bei der praktischen Realisierung des Konfigurationsmittels.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Biegepresse mit einer erfindungsgemäßen Sicherheitseinrichtung,
- Fig. 2: die Biegepresse aus Fig. 1 in einer Seitenansicht,
- Fig. 3: die Anordnung der Lichtstrahlen bei einem besonders bevorzugten Ausführungsbeispiel einer erfindungsgemäßen Sicherheitseinrichtung, und
- Fig. 4: die bevorzugte Sicherheitseinrichtung bei einem alternativen Biegewerkzeug.

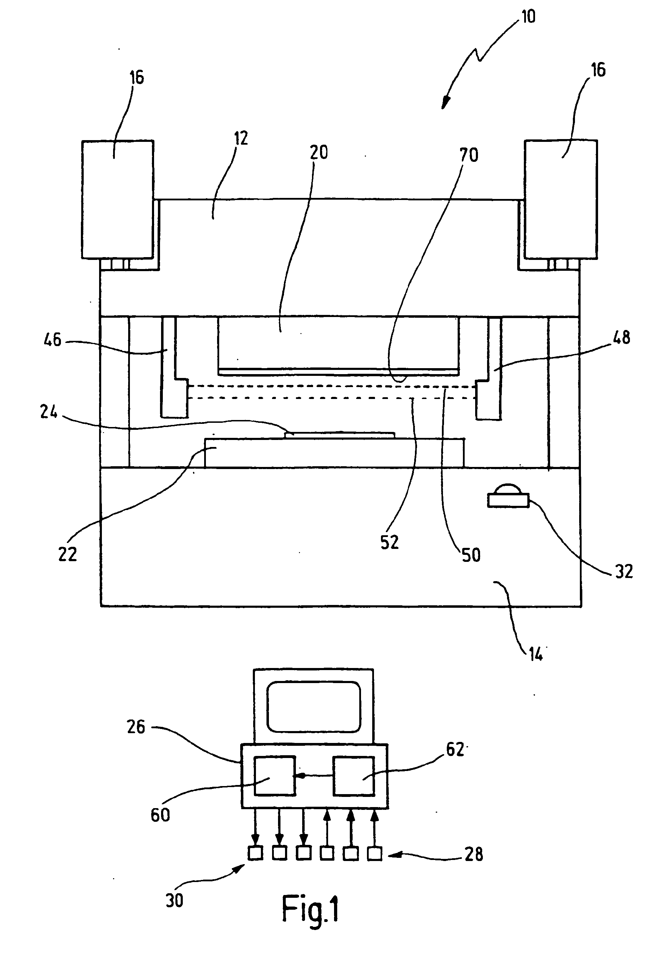

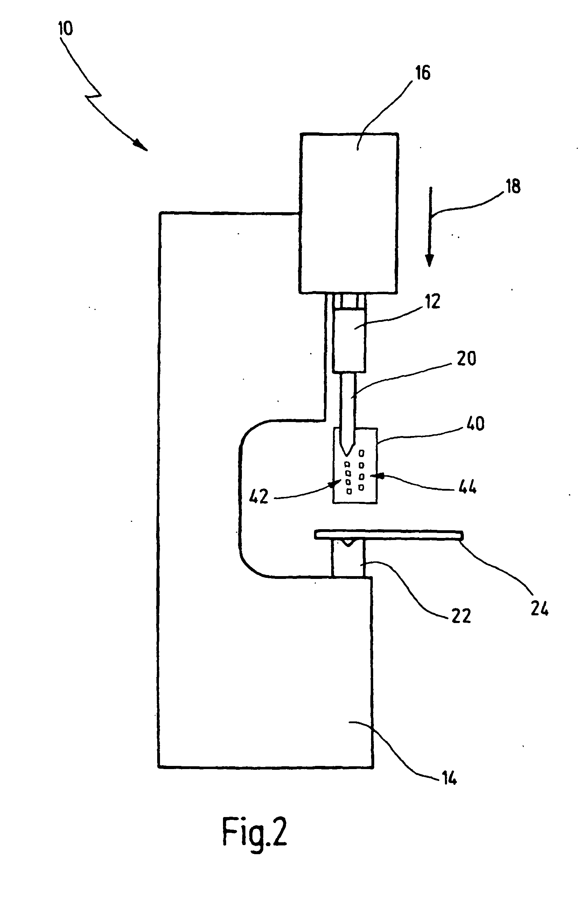

In den Figuren 1 und 2 ist eine Biegepresse mit einer erfindungsgemäßen Sicherheitseinrichtung in ihrer Gesamtheit mit der Bezugsziffer 10 bezeichnet. Die Biegepresse 10 besitzt in an sich bekannter Weise ein erstes, in diesem Fall oberes Maschinenteil 12 und ein zweites, hier unteres Maschinenteil 14. Das obere Maschinenteil 12 kann über einen Antrieb, der hier schematisch bei der Bezugsziffer 16 angedeutet ist, in Richtung eines Pfeils 18 eine Arbeitsbewegung ausführen.

An dem oberen Maschinenteil 12 ist ein Biegestempel 20 angeordnet. Am unteren Maschinenteil 14 befindet sich eine Matrize 22. Der Biegestempel 20 und die Matrize 22 bilden zusammen die Presswerkzeuge, mit denen ein Werkstück 24 umgeformt werden kann. Bei dem Werkstück 24 handelt es sich hier beispielsweise um ein Blechteil.

Mit der Bezugsziffer 26 ist eine Steuereinheit bezeichnet, die in an sich bekannter Weise Sensorsignale 28 von verschiedenen Sensoren der Biegepresse 10 erhält und in Abhängigkeit davon Steuersignale 30 zum Steuern der Arbeitsbewegung 18 und anderer Vorgänge erzeugt. Die Steuersignale 30 steuern in an sich bekannter weise Aktoren, wie beispielsweise den Antrieb 16 an.

Mit der Bezugsziffer 32 ist hier außerdem ein Not-Aus-Schalter angedeutet, dessen Schaltstellung ebenfalls von der Steuereinheit 26 ausgewertet wird.

Mit der Bezugsziffer 40 ist in Fig. 2 eine Detektoranordnung bezeichnet, die Bestandteil der neuen Sicherheitseinrichtung ist. Die Detektoranordnung 40 beinhaltet erste Lichtschranken 42 und zweite Lichtschranken 44, die jeweils zeilenförmig untereinander angeordnet sind, wobei sich die beiden Zeilen 42, 44 jeweils in etwa parallel zur Arbeitsbewegung 18 erstrecken.

Die ersten Lichtschranken 42 sind dabei unmittelbar im Bewegungspfad des Biegestempels 20 und mit einem zunehmenden Abstand von diesem angeordnet, während die zweiten Lichtschranken 44 einen seitlichen Versatz zum Bewegungspfad des Biegestempels 20 aufweisen. Anders ausgedrückt ist das Lichtgitter, das von den zweiten Lichtschranken 44 aufgespannt wird, hier zur Bedienerseite der Biegepresse 10 hin aus dem Bewegungspfad des Biegestempels versetzt.

Die ersten und zweiten Lichtschranken beinhalten in an sich bekannter Weise Lichtsender, vorzugsweise in Form von Laserdioden und/oder Infrarotdioden, und Lichtempfänger, mit denen das Auftreffen eines Laser- bzw. Infrarotstrahls detektierbar ist. Die Lichtsender sind bei dem hier gezeigten Ausführungsbeispiel zu einer Senderanordnung 46 zusammengefasst, die Lichtempfänger zu einer Empfängeranordnung 48, wie dies in Fig. 1 gezeigt ist. Die Sender- und Empfängeranordnungen 46, 48 sind über geeignete Montageteile starr mit dem bewegten Maschinenteil 12 verbunden, so dass die Lichtschranken 42, 44 sich mit dem Biegestempel 20 mitbewegen. Beispielhaft sind in Fig. 1 zwei Lichtstrahlen 50, 52 der ersten Lichtschranken 42 gezeigt.

Die Sende- und Empfängeranordnungen 46, 48 sind über entsprechende Signalleitungen (hier der Übersichtlichkeit halber nicht gezeigt) mit der Steuereinheit 26 verbunden, d.h. zu den Steuersignalen 30 gehören u.a. Signale zum Einschalten der Lichtsender in der Senderanordnung 46. Gleichermaßen beinhalten die Sensorsignale 28 Ausgangssignale der Lichtempfänger in der Empfängeranordnung 48. Die Steuereinheit 26 kann daher die Unterbrechung eines Lichtstrahls 50, 52 der Lichtschranken 42, 44 detektieren und in Abhängigkeit von den im Übrigen vorliegenden Sensorsignalen 28 die Arbeitsbewegung 18 des Maschinenteils 12 stoppen. Die Arbeitsbewegung 18 wird insbesondere dann gestoppt, wenn die Steuereinheit 26 feststellt, dass einer der Lichtstrahlen 50, 52 zu einem Zeitpunkt unterbrochen wird, zu dem bei ordnungsgemäßem Betriebsablauf eine Unterbrechung nicht hätte stattfinden dürfen. In der Praxis kann dies beispielsweise dadurch geschehen, dass der Bediener der Biegepresse 10 versehentlich in den Bewegungspfad des Biegestempels 20 eingreift.

Gemäß einem bevorzugten Ausführungsbeispiel ist die Steuereinheit 26 hier eine sogenannte SPS (Speicher Programmierbare Steuerung), die durch geeignete Maßnahmen, wie insbesondere eine redundante, diversitäre Auslegung, zum Steuern von sicherheitskritischen Prozessen zugelassen ist. Entsprechende SPS werden beispielsweise von der Anmelderin der vorliegenden Erfindung kommerziell angeboten.

Ein Großteil der eigentlichen Steuerfunktionalität wird bei einer SPS durch geeignete Programmierung realisiert. Bei dem hier beschriebenen, bevorzugten Ausführungsbeispiel beinhaltet diese Programmierung auch zwei Programmmodule 60, 62, die in der Darstellung in Fig. 1 als schematische Blöcke innerhalb der Steuereinheit 26 dargestellt sind. Das Programmmodul 60 stellt eine Parametrierfunktion zur Verfügung, mit der beim Einrichten der Biegepresse 10 unter anderem die benötigten Lichtschranken 42, 44 ausgewählt (aktiviert bzw. deaktiviert) werden. Das Programmmodul 62 ermöglicht eine automatisierte Bestimmung des aktuellen Nachlaufweges der Biegepresse 10 in einem Einricht- bzw. Testmodus. Der bestimmte aktuelle Nachlaufweg wird dem Programmmodul 60 als Parameter übergeben und bei der Auswahl der Lichtschranken 42, 44 als notwendiges Kriterium berücksichtigt. Zusammen sind die Programmmodule 60, 62 hier somit Bestandteile eines sogenannten Konfigurationsmittels, mit dem einzelne der Lichtschranken 42, 44 gezielt ausgewählt werden können.

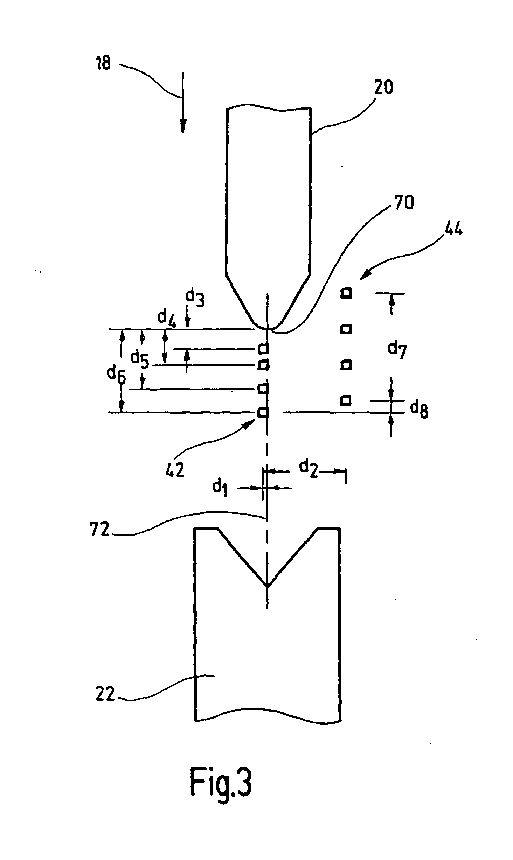

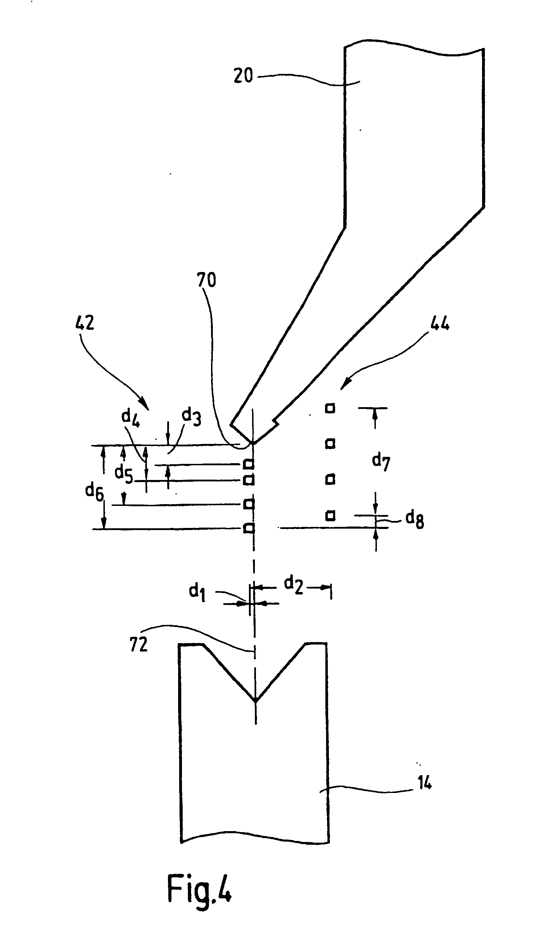

Die Details der erfindungsgemäßen Auswahl werden nachfolgend anhand eines besonders bevorzugten Ausführungsbeispiels beschrieben, das in den Figuren 3 und 4 in Kombination mit zwei unterschiedlichen Biegestempeln 20 dargestellt ist. Gleiche Bezugszeichen bezeichnen dabei jeweils dieselben Elemente wie in den vorangehenden Figuren.

Der Biegestempel 20 besitzt in allen Fällen eine in Richtung der Arbeitsbewegung 18 gesehen vorlaufende Kontur, die hier mit der Bezugsziffer 70 bezeichnet ist. Allgemein wird darunter in diesem Zusammenhang der jeweils "vorderste" Bereich des Biegestempels 20 verstanden, der je nach Anwendungsfall jedoch unterschiedlich ausgebildet sein kann. In Fig. 3 ist ein Ausführungsbeispiel eines Biegestempels 20 mit einer eher abgerundeten Kontur 70 dargestellt, während die Kontur 70 im Ausführungsbeispiel gemäß Fig. 4 eine scharfe Kante ist.

Mit der Bezugsziffer 72 ist hier eine (gedachte) Bewegungsebene bezeichnet, die die vorlaufende Kontur 70 aufgrund der Arbeitsbewegung 18 des Biegestempels 20 beschreibt. Die Lichtschranken 42, 44 der erfindungsgemäßen Sicherheitseinrichtung werden nachfolgend in Bezug auf diese Bewegungsebene sowie in Bezug auf die Kontur 70 erläutert.

Gemäß einem besonders bevorzugten Ausführungsbeispiel beinhaltet die neue Sicherheitseinrichtung vier erste Lichtschranken 42 und vier zweite Lichtschranken 44. Grundsätzlich kann jedoch auch eine größere oder geringere Anzahl von Lichtschranken eingesetzt werden. Darüber hinaus ist es bei der erfindungsgemäßen Sicherheitseinrichtung nicht ausgeschlossen, dass weitere, hier nicht dargestellte Lichtschranken Verwendung finden, beispielsweise um eine Bereichsabsicherung auf der rückwärtigen Seite der Biegepresse 10 zu realisieren, zu Justierungszwecken oder aus anderen Gründen.

Die ersten Lichtschranken 42 sind hier im Bereich der Bewegungsebene 72, jedoch mit einem geringfügigen Versatz d₁ von etwa 1 mm verteilt angeordnet. Der geringfügige Versatz d₁ besitzt Vorteile insbesondere beim Biegen von Kästen, da hierdurch die Anzahl von Fehlalarmen durch einen sich aufstellenden Teil des zu bearbeitenden Werkstücks 24 reduziert wird. Grundsätzlich ist es jedoch auch möglich, die ersten Lichtschranken 42 exakt auf der Bewegungsebene 72, vor der Bewegungsebene 72 oder auch wechselweise vor und hinter der Bewegungsebene 72 anzuordnen.

Die zweiten Lichtschranken 44 besitzen einen Abstand d₂ von hier 20 mm zu der Ebene der ersten Lichtschranken 42. Dieser Abstand hat sich bei ersten Versuchen als vorteilhaft erwiesen. Geht man von einer Mindestbreite der Matrize 14 von 20 mm aus, ist es jedoch grundsätzlich auch denkbar, den Abstand d₂ auf 25 bis 30 mm zu vergrößern. Generell ist es bei diesen Abständen möglich, mit der gezeigten Anordnung auch das Eingreifen eines Fingers schräg von unten rechtzeitig zu erkennen.

Die Abstände der einzelnen ersten Lichtschranken 42 von der Kontur 70 betragen beim hiesigen bevorzugten Ausführungsbe i-spiel d₃ = 5 mm, d₄ = 9 mm, d₅ = 15 mm und d₆ = 21 mm. Der Abstand d₇ zwischen den beiden am weitesten voneinander entfernt liegenden zweiten Lichtschranken 44 beträgt 27 mm. Die zweiten Lichtschranken 44 sind voneinander gleichmäßig beabstandet, so dass der Abstand zwischen zwei benachbarten zweiten Lichtschranken 44 jeweils 9 mm beträgt. Schließlich beträgt der Abstand d₈, um den die vorderste erste Lichtschranke 42 der vordersten zweiten Lichtschranke 44 vorausläuft d₈ = 3 mm. Es versteht sich, dass diese Angaben im Rahmen der üblichen Toleranzen und Gestaltungsspielräume auch variiert werden können.

Aus den angegebenen Abständen ergibt sich, dass die oberste zweite Lichtschranke 44 in Richtung der Arbeitsbewegung 18 gesehen der Kontur 70 nachläuft. Des weiteren läuft die unterste zweite Lichtschranke 44 der untersten ersten Lichtschranke 42 nach. Durch diese Anordnung bilden die zweiten Lichtschranken 44 einen guten Schutz gegenüber einem Nachgreifen in der Bewegung des Biegestempels 20 von schräg oben. Gleichzeitig bleibt jedoch der eigentliche Bearbeitungsvorgang weitgehend unbeeinflusst von den zweiten Lichtschranken 44.

Die Konfiguration der erfindungsgemäßen Sicherheitseinrichtung ist nun wie folgt:

Bei einer typischen Biegepresse 10 sind die ersten Lichtschranken 42 mit den Abständen d₃ = 5 mm und d₄ = 9 mm aktiviert, während die Lichtschranken 42 in den Abständen d₅ = 15 mm und d₆ = 21 mm deaktiviert sind. Ferner sind alle zweiten Lichtschranken 44 aktiviert, deren Lichtstrahlen nicht tiefer liegen als der tiefstliegende Lichtstrahl der ersten Lichtschranken. Konkret sind dann also die beiden oberen zweiten Lichtschranken 44 aktiv, während die beiden unteren zweiten Lichtschranken 44 deaktiviert sind. Eine solche Konfiguration ist für eine typische, standardmäßige Biegepresse 10 mit einem zulässigen Nachlaufweg von bis zu 7,5 mm gut geeignet. Eine entsprechende Betriebsart ist beispielhaft in Fig. 1 gezeigt.

Bei besonders schnellen Pressen wird zusätzlich die erste Lichtschranke 44 im Abstand von d₅ = 15 mm aktiviert, wodurch Nachlaufwege bis 13 mm zulässig sind. Des weiteren werden gemäß einer bevorzugten Ausführung der Erfindung auch die darüberliegenden Lichtschranken jeweils aktiviert, um ein Nachgreifen von oben zuverlässig zu erkennen. Bei den zweiten Lichtschranken 44 ist nur die unterste deaktiviert.

Bei einigen Pressentypen einer besonders kostensparenden Hydraulik liegen die Nachlaufwege noch höher. In diesem Fall werden sämtliche ersten und zweiten Lichtstrahlen 42, 44 verwendet, wobei dann Nachlaufwege bis 19 mm zulässig sind.

Bei besonders langsam arbeitenden Pressen, insbesondere solchen mit geringen Hüben, wird vorteilhafterweise nur die oberste erste Lichtschranke 42 im Abstand von d₃ = 5 mm verwendet. Hierdurch kann ein Nachlaufweg bis 3,5 mm abgesichert werden. Von den zweiten Lichtschranken 44 sind dabei nur die beiden obersten aktiviert.

Insgesamt ist aufgrund der neuen Anordnung von ersten und zweiten Lichtschranken 42, 44 damit eine sehr flexible Anpassung der Sicherheitseinrichtung an verschiedene Pressentypen und gegebenenfalls auch an verschiedene Betriebsarten eines Pressentyps möglich. Die Einrichte- bzw. Umrüstezeit ist dabei vergleichsweise kurz, der entsprechende Aufwand gering, da im Wesentlichen allein über die Steuereinheit 26 und mit Hilfe der Programmmodule 60, 62 die entsprechende Aktivierung und Deaktivierung der Lichtschranken 42, 44 erfolgen kann.

Soweit hier im Vorangehenden jeweils von der Aktivierung und Deaktivierung der Lichtschranken 42, 44 gesprochen ist, sei der Vollständigkeit halber darauf hingewiesen, dass dies nicht notwendigerweise ein "Ausschalten" der Lichtschranken beinhaltet. Selbstverständlich können die jeweils deaktivierten Lichtschranken 42, 44 im Sinne der vorliegenden Erfindung ausgeschaltet sein. Es ist demgegenüber jedoch bevorzugt, wenn die jeweils deaktivierten Lichtschranken trotzdem eingeschaltet sind, d.h. einen Lichtstrahl 50, 52 erzeugen. Deaktivierung in diesem Sinne bedeutet daher vorrangig, dass die Lichtschranken nicht (mehr) im Hinblick auf einen Not-Stopp zum Verhüten von Unfällen ausgewertet werden. Die Information der "deaktivierten" Lichtschranken kann jedoch zu anderen Zwecken ausgewertet werden, beispielsweise zur Überprüfung der Lage des Werkstücks 24 auf der Matrize 14.

Abweichend hiervon und abweichend von dem hier dargestellten, bevorzugten Ausführungsbeispiel, bei dem die Konfiguration der Sicherheitseinrichtung mit Hilfe des Programmmoduls 60 "per Software" erfolgt, kann die Konfiguration in anderen Ausführungsbeispielen auch hardwaremäßig geschehen. In einem einfachen Ausführungsbeispiel werden die jeweils nicht benötigten (deaktivierten) Lichtschranken beispielsweise durch Steckbrücken, Auswahlschalter und/oder eine entsprechende Verdrahtung aktiviert und deaktiviert.

## Patentansprüche

1. Sicherheitseinrichtung für eine Maschine (10), bei der ein erstes Maschinenteil (12, 20) eine Arbeitsbewegung (18) gegen ein zweites Maschinenteil (14, 24) ausführt, wobei das erste Maschinenteil (12, 20) eine in Bewegungsrichtung (18) vorlaufende Kontur (70) besitzt, die eine Bewegungsebene (72) definiert,
- mit einer Vielzahl von ersten Lichtschranken (42), die während der Arbeitsbewegung (18) mit dem ersten Maschinenteil (12, 20) mitlaufen, wobei sich Lichtstrahlen (50, 52) der ersten Lichtschranken (42) parallel zu der Bewegungsebene (72) erstrecken und im Bereich der Bewegungsebene (72) derartig verteilt sind, dass sie der vorlaufenden Kontur (70) in Richtung der Arbeitsbewegung (18) gesehen mit zunehmendem Abstand vorauslaufen,
- mit einer Steuereinheit (26), die die Arbeitsbewegung (18) des ersten Maschinenteils (12, 20) in Abhängigkeit von den ersten Lichtschranken (42) stoppt, und
- mit einem Konfigurationsmittel (60, 62), mit dessen Hilfe ausgewählte erste Lichtschranken (42) zumindest für die Dauer der Arbeitsbewegung (18) deaktivierbar sind.

2. Sicherheitseinrichtung nach Anspruch 1, **dadurch gekennzeichnet, dass** das Konfigurationsmittel (60, 62) so ausgebildet ist, dass die ersten Lichtschranken (42) nur in umgekehrter Reihenfolge ihrer Abstände von der vorlaufenden Kontur (70) deaktivierbar sind.

3. Sicherheitseinrichtung nach Anspruch 1 oder 2, **gekennzeichnet durch** eine Vielzahl von zweiten Lichtschranken (44), deren Lichtstrahlen (50, 52) ein Lichtgitter aufspannen, das abseits der Bewegungsebene (72), jedoch im wesentlichen parallel dazu liegt.

4. Sicherheitseinrichtung nach Anspruch 3, **dadurch gekennzeichnet, dass** die zweiten Lichtschranken (44) bei der Arbeitsbewegung mit dem ersten Maschinenteil (12, 20) mitlaufen.

5. Sicherheitseinrichtung nach Anspruch 3 oder 4, **dadurch gekennzeichnet, dass** mit Hilfe des Konfigurationsmittels (60, 62) auch ausgewählte zweite Lichtschranken (44) zumindest für die Dauer der Arbeitsbewegung (18) deaktivierbar sind.

6. Sicherheitseinrichtung nach Anspruch 5, **dadurch gekennzeichnet, dass** nur solche zweite Lichtschranken (44) deaktivierbar sind, die einer nicht-deaktivierten ersten Lichtschranke (42) in Richtung der Arbeitsbewegung (18) gesehen vorlaufen.

7. Sicherheitseinrichtung nach einem der Ansprüche 3 bis 6, **dadurch gekennzeichnet, dass** die Vielzahl von zweiten Lichtschranken (44) zumindest eine zweite Lichtschranke beinhaltet, die der vorlaufenden Kontur (70) in Richtung der Arbeitsbewegung (18) gesehen nachläuft.

8. Sicherheitseinrichtung nach einem der Ansprüche 1 bis 7, **dadurch gekennzeichnet, dass** zumindest vier erste Lichtschranken (42) vorhanden sind, deren Lichtstrahlen (50, 52) im Abstand von etwa 5 mm, etwa 9 mm, etwa 15 mm und etwa 21 mm zu der vorlaufenden Kontur verlaufen.

9. Sicherheitseinrichtung nach einem der Ansprüche 1 bis 8, **dadurch gekennzeichnet, dass** das Konfigurationsmittel (60, 62) einen Teil (62) zum Bestimmen eines Nachlaufweges des ersten Maschinenteils (12, 20) besitzt und dass die ersten Lichtschranken (42) nur in Abhängigkeit von dem Nachlaufweg deaktivierbar sind.

## Claims

1. A safety apparatus for a machine (10), in which a first machine part (12, 20) performs a working movement (18) towards a second machine part (14, 24), the first machine part (12, 20) having a leading edge (70) in the direction of movement (18), and the edge (70) defining a plane (72) of movement,
- comprising a plurality of first light barriers (42) which run with the first machine part (12, 20) during the working movement (18), wherein light beams (50, 52) of the first light barriers (42) extend parallel to the plane (72) of movement and are distributed in the region of the plane (72) of movement in such a way that they run in advance of the leading edge (70) with increasing distance as viewed in the direction of the working movement (18),
- comprising a control unit (26) which stops the working movement (18) of the first machine part (12, 20) in response to the first light barriers (42), and
- comprising a configuration device (60, 62), by means of which selected first light barriers (42) can be deactivated at least for the duration of the working movement (18).

2. The safety apparatus according to Claim 1, **characterized in that** the configuration device (60, 62) is designed in such a way that the first light barriers (42) can be deactivated only in a reverse sequence of their distances from the leading edge (70).

3. The safety apparatus according to Claim 1 or 2, **characterized by** a plurality of second light barriers (44), the light beams (50, 52) of which spread out a light grid which lies to one side of the plane (72) of movement but essentially parallel thereto.

4. The safety apparatus according to Claim 3, **characterized in that** the second light barriers (44) run with the first machine part (12, 20) during the working movement.

5. The safety apparatus according to Claim 3 or 4, **characterized in that**, by means of the configuration device (60, 62), selected second light barriers (44) can also be deactivated at least for the duration of the working movement (18).

6. The safety apparatus according to Claim 5, **characterized in that** only those second light barriers (44) which run in advance of a non-deactivated first light barrier (42) as viewed in the direction of the working movement (18) can be deactivated.

7. The safety apparatus according to anyone of Claims 3 to 6, **characterized in that** the plurality of second light barriers (44) includes at least one second light barrier which trails behind the leading edge (70) as viewed in the direction of the working movement (18).

8. The safety apparatus according to anyone of Claims 1 to 7, **characterized in that** there are at least four first light barriers (42), the light beams (50, 52) of which run at a distance of about 5 mm, about 9 mm, about 15 mm and about 21 mm from the leading edge.

9. The safety apparatus according to anyone of Claims 1 to 8, **characterized in that** the configuration device (60, 62) has a part (62) for determining overtravel of the first machine part (12, 20), and **in that** the first light barriers (42) can be deactivated only as a function of the overtravel.

## Revendications

1. Dispositif de sécurité pour une machine (10), dans lequel une première pièce mécanique (12, 20) exécute un mouvement de travail (18) contre une seconde pièce mécanique (14, 24), la première pièce (12, 20) possédant un contour (70) avançant dans un sens de déplacement (18), qui définit un plan de déplacement (72),
- avec une multitude de premières barrières lumineuses (42) qui fonctionnent pendant le mouvement de travail (18) avec la première pièce mécanique (12, 20), des rayons lumineux (50, 52) des premières barrières lumineuses (42) se propageant de manière parallèle au plan de déplacement (72) et étant distribuées dans le secteur du plan de déplacement (72) de telle sorte qu'elles précèdent le contour (70) avançant en direction du mouvement de travail (18) avec une distance croissante,
- avec une unité de commande (26) qui stoppe le mouvement de travail (18) de la première pièce mécanique (12, 20) en fonction des premières barrières lumineuses (42), et
- avec un moyen de configuration (60, 62), à l'aide duquel des premières barrières lumineuses (42) choisies peuvent être désactivées au moins pendant la durée du mouvement de travail (18).

2. Dispositif de sécurité selon la revendication 1, **caractérisé en ce que** le moyen de configuration (60, 62) est conçu de sorte que les premières barrières lumineuses (42) peuvent être désactivées uniquement dans un ordre inversé de leurs distances du contour avançant (70).

3. Dispositif de sécurité selon la revendication 1 ou 2, **caractérisé par** une multitude de secondes barrières lumineuses (44), dont les rayons lumineux (50, 52) définissent une grille lumineuse qui se trouve à l'écart du plan de déplacement (72), de manière toutefois essentiellement parallèle à celui-ci.

4. Dispositif de sécurité selon la revendication 3, **caractérisé en ce que** les secondes barrières lumineuses (44) fonctionnent avec la première pièce mécanique (12, 20).

5. Dispositif de sécurité selon la revendication 3 ou 4, **caractérisé en ce qu'**à l'aide du moyen de configuration (60, 62) les secondes barrières lumineuses (44) choisies peuvent également être désactivées au moins pendant la durée du mouvement de travail (18).

6. Dispositif de sécurité selon la revendication 5, **caractérisé en ce que** seules peuvent être désactivées des secondes barrières lumineuses (44) de ce type, qui précèdent une première barrière lumineuse (42) non désactivée en direction du mouvement de travail (18).

7. Dispositif de sécurité selon l'une des revendications 3 à 6, **caractérisé en ce que** la multitude des secondes barrières lumineuses (44) comprend au moins une seconde barrière lumineuse qui poursuit le contour avançant (70) en direction du mouvement de travail (18)

8. Dispositif de sécurité selon l'une des revendications 1 à 7, **caractérisé en ce qu'**il existe au moins quatre premières carrières lumineuses (42), dont les rayons lumineux (50, 52) se dispersent à une distance d'environ 5 mm, environ 9 mm, environ 15 mm et environ 21 mm par rapport au contour avançant.

9. Dispositif de sécurité selon l'une des revendications 1 à 8, **caractérisé en ce que** le moyen de configuration (60, 62) comprend une partie (62) servant à déterminer une distance de ralentissement de la première pièce mécanique (12, 20) et **en ce que** les premières barrières lumineuses (42) peuvent être désactivées uniquement en fonction de la distance de ralentissement.
